# EUROPÄISCHE PATENTANMELDUNG

(11) **EP 0 567 776 A2**
(43) Veröffentlichungstag der Anmeldung: **03.11.1993**
(21) Anmeldenummer: 93104856.5
(22) Anmeldetag: 24.03.1993
(51) Int. Cl.: G06K 7/10, G06K 11/08

(54) **Einrichtung mit mindestens einem optischen Sender und einem optischen Empfänger**

(30) Priorität: 28.03.1992 DE 4210289
(71) Anmelder: LOHWASSER ELEKTROTECHNIK GMBH, D-64750 Lützelbach (DE)
(72) Erfinder: Lohwasser, Walter, W-6129 Lützelbach 5 (DE)
(74) Vertreter: Gornott, Dietmar, Dipl.-Ing.

(57) **Zusammenfassung**

Bei einer Einrichtung mit mindestens einem optischen Sender (Leuchtdioden 1,2,3) und einem optischen Empfänger (Fototransistoren 4,5,6), sendet der Sender (1,2,3) pulsierend Licht aus. Nur das während der Impulsdauer in den Empfänger (4,5,6) eintretende Licht wird ausgewertet.

## Beschreibung

Die Erfindung betrifft eine Einrichtung mit mindestens einem optischen Sender und einem optischen Empfänger.

Es ist bekannt, bei betrieblichen Transportsystemen die zu transportierenden Gegenstände und die Transportwagen mit einem Informationsträger zu versehen, auf welchem die Information mit Hilfe geeigneter Markierungen aufgebracht ist und mit Leseeinrichtungen gelesen werden kann. Auf diese Weise ist eine Steuerung der transportierten Gegenstände bzw. der Transportwagen entsprechend der aufgebrachten Inforamtion möglich. Dabei kann jedoch der Lesevorgang durch einfallendes Licht gestört werden.

Ferner werden Lichtschranken zum Abtasten von Teilen für eine darauffolgende Bearbeitung verwendet. Außerdem dienen Lichtschranken zu Sicherheitszwecken.

Aufgabe der vorliegenden Erfindung ist es, Fehler zu vermeiden, die bei einer oder mehreren Lichtschranken durch Fremdlicht verursacht werden. Die erfindungsgemäße Einrichtung ist dadurch gekennzeichnet, daß der Sender pulsierend Licht aussendet und daß nur das während der Impulsdauer in den Empfänger eintretende Licht ausgewertet wird.

Die zeitliche Begrenzung des eingetretenen Lichts kann beispielsweise durch geeignetes Schalten der Betriebsspannung des Empfängers, z. B. eines Fototransistors, oder durch Austasten des vom Fototransistor oder einem anderen optoelektrischen Wandler erzeugten Signals erfolgen.

Durch die erfindungsgemäßen Maßnahmen wird die Wirkung von Fremdlicht entscheidend verringert. So wird beispielsweise der Anteil des Raumlichtes, der im Empfänger Störungen verursachen könnte, um das Tastverhältnis vermindert. Die Erfindung ist in vorteilhafter Weise sowohl bei Einrichtungen mit transparenten Informationsträgern als auch bei Einrichtungen, welche mit reflektierenden Informationsträgern arbeiten, und bei anderen Einrichtungen mit Lichtschranken anwendbar.

Häufig werden Informationsträger mit mehreren Reihen von Markierungen verwendet, wobei jeder Spur ein Empfänger zugeordnet ist. Störungen durch Lichteinfall in einen Empfänger von einer nicht zu dem Empfänger gehörenden Reihe können gemäß einer Weiterbildung der Erfindung dadurch ausgeschlossen werden, daß zum Abtasten jeweils einer von mehreren Reihen des Informationsträgers jeder Reihe ein Sender und ein Empfänger vorgesehen sind, daß die Sender zu verschiedenen Zeiten Licht aussenden und daß Licht ausgewertet wird, das in die Empfänger während der Impulsdauer des jeweils zugeordneten Senders eintritt.

Eine andere Weiterbildung vermeidet eine Verfälschung der abzutastenden Information dadurch, daß der pulsierende Betrieb der Sender mit einer wesentlich größeren Frequenz als die Frequenz des durch die Abtastung entstehenden Informationssignals erfolgt.

Werden mehrere Lichtschranken von je einem optischen Sender und einem optischen Empfänger gebildet, kann in vorteilhafter Weise vorgesehen sein, daß die Sender zu verschiedenen Zeiten Licht aussenden und daß Licht ausgewertet wird, das in die Empfänger während der Impulsdauer des jeweils zugeordneten Senders eintritt.

Eine vorteilhafte Ausgestaltung dieser Weiterbildung besteht darin, daß die Lichtschranken einen Lichtvorhang bilden und daß bei Unterbrechung von einer oder mehreren Lichtschranken ein Signal abgegeben wird.

Bei einer anderen vorteilhaften Ausgestaltung sind die Lichtschranken zur Erkennung von Teilen vorgesehen, wobei Ausgangssignale der Lichtschranken einer Auswerteschaltung zuführbar sind.

Eine weitere Ausgestaltung der Erfindung besteht darin, daß während derjenigen Zeit, während der das in einen Empfänger eintretende Licht ausgewertet wird, der zugeordnete Sender ein Codesignal sendet. Dadurch kann durch eine geeignete Auswertung der von den Empfängern aufgenommenen und in elektrische Signale umgewandelten Codesignale im Falle einer Störung in einfacher Weise festgestellt werden, welcher Sender bzw. welcher Empfänger gestört ist.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild eines Ausführungsbeispiels,
- Fig. 2: eine schematische Darstellung einer Anordnung der Lichtschranken zur Abtastung eines Informationsträgers,
- Fig. 3: eine schematische Darstellung einer als Lichtvorhang bekannten Anordnung von mehreren Lichtschranken,
- Fig. 4: ein vereinfachtes Blockschaltbild zur Erläuterung der Auswertung der Ausgangssignale der Lichtschranken nach Fig. 3,
- Fig. 5 und Fig. 6: die Verwendung von Lichtschranken zur Erkennung von Teilen und
- Fig. 7: ein Blockschaltbild zur Auswertung der Ausgangssignale der Lichtschranken nach den Figuren 5 und 6.

Gleiche Teile sind in den Figuren mit gleichen Bezugszeichen versehen.

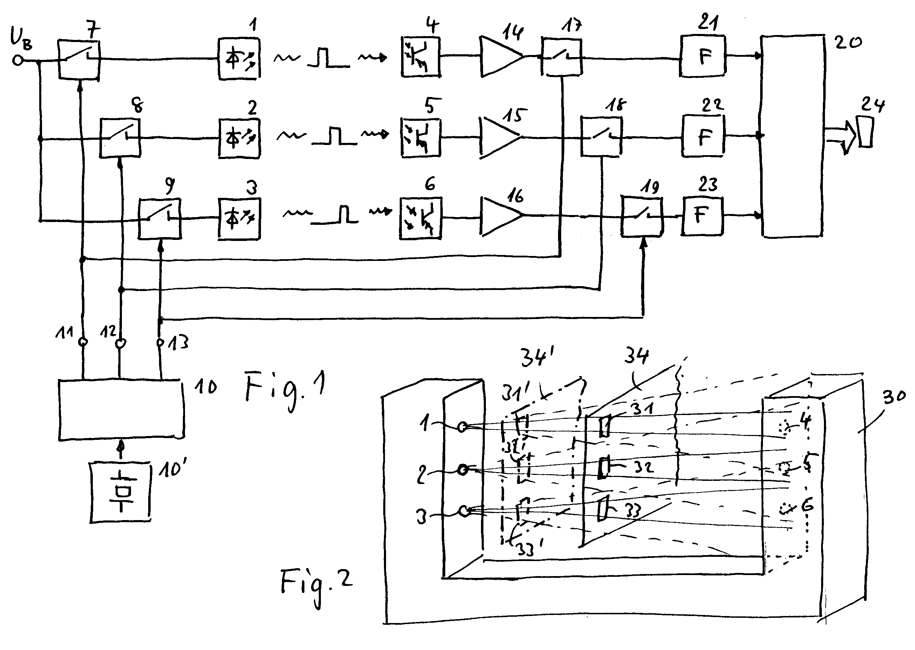

Bei der Einrichtung nach Fig. 1 werden drei Lichtschranken von je einer Leuchtdiode 1, 2, 3 und einem Fototransistor 4, 5, 6 gebildet. Die Leuchtdioden erhalten ihre Betriebsspannung U_{B} über steuerbare Schalter 7, 8, 9, die von einer Steuerschaltung 10 zyklisch in den leitenden Zustand gesteuert werden. Die Steuerschaltung 10 kann in einfacher Weise als Ringzähler aufgebaut werden, die von einem im einzelnen nicht dargestellten Oszillator 10' höherer Frequenz getaktet wird.

Die von den Fototransistoren 4, 5, 6 erzeugten elektrischen Signale werden in Verstärkern 14, 15, 16 verstärkt. Dabei zeigt sich ein weiterer Vorteil der Erfindung, daß nämlich Wechselspannungsverstärker verwendet werden können. Damit werden für Gleichspannungsverstärker typische Probleme - wie beispielsweise Temperaturdrift - vermieden. An die Verstärker 14, 15, 16 schließen sich steuerbare Schalter 17, 18, 19 an, die über die gleichen Ausgänge 11, 12, 13 der Steuerschaltung 10 geschaltet werden, welche auch den steuerbaren Schaltern 7, 8, 9 Steuersignale zuführen.

Dadurch ist sichergestellt, daß von den jeweils von einem der Fototransistoren 4, 5, 6 erzeugten Signalen nur diejenigen Anteile in der folgenden Auswerteschaltung 20 ausgewertet werden, die vom Licht der dem jeweiligen Fototransistor zugeordneten Leuchtdiode 1, 2, 3 bzw. von einer entsprechenden Markierung 31, 32, 33 des Informationsträgers 34 (Fig. 2) abhängen. Einem Ausgang 24 der Auswerteschaltung 20 kann ein der abgetasteten Information entsprechendes Datenwort entnommen werden.

Eine nähere Erläuterung der Auswerteschaltung 20 ist zum Verständnis der Erfindung nicht erforderlich. Eine geeignete Auswertung kann beispielsweise entsprechend der Patentanmeldung P 39 00 978.5 der Anmelderin ausgeführt sein. Im Zusammenhang mit der vorliegenden Erfindung sei erwähnt, daß die Auswerteschaltung 20 diejenigen Impulse auswertet, die durch Abtastung von Markierungen 31, 32, 33 des Informationsträgers 34 entstehen, wobei die durch die pulsierende Ansteuerung der Leuchtdioden 1, 2, 3 entstehenden Impulse eine wesentliche höhere Frequenz aufweisen. Um die Auswertung bzw. Zählung dieser Impulse zu vermeiden, sind zwischen den steuerbaren Schaltern 17, 18, 19 und der Auswerteschaltung 20 Filter 21, 22, 23 vorgesehen. Die Filter können beispielsweise dadurch realisiert werden, daß die Impulse mit höherer Frequenz gezählt werden und nur dann ein Signal weitergeleitet wird, wenn eine vorgegebene Anzahl von Impulsen aufgetreten ist.

Bei der schematischen Darstellung der Abtasteinrichtung in Fig. 2 sind an einer U-förmigen Halterung 30 die Leuchtdioden 1, 2, 3 und die Fototransistoren 4, 5, 6 angeordnet. Es sind zwei Stellungen des Informationsträgers 34 und 34' einschließlich jeweils dreier als Loch ausgeführte Markierungen 31, 32, 33, 31', 32', 33' dargestellt. In der mittleren Stellung des Informationsträgers 34 fällt das von den Leuchtdioden durch die Markierungen hindurchtretende Licht nur auf die jeweils zugehörige Leuchtdiode, was an den von den Leuchtdioden 1, 2, 3 ausgehenden, durchgezogen gezeichneten Randstrahlen erkennbar ist.

Eine praktisch ausgeführte Einrichtung gemäß der obengenannten Patentanmeldung der Anmelderin ist zwar in der Lage, innerhalb eines großen Toleranzbereichs der Stellung des Informationsträgers 34 die Information zuverlässig zu lesen. Es ist jedoch bei großen Längen der Lichtschranken, die gegebenenfalls erforderlich werden, um große Toleranzen bei den Transporteinrichtungen zu ermöglichen, nicht auszuschließen, daß in extremen Stellungen des Informationsträgers Störungen durch Strahlen entstehen, die zu "falschen" Empfängern gelangen.

Dieses wird in Fig. 2 am Beispiel des Informationsträgers 34' dargestellt, der sich in der Nähe der Leuchtdioden 1, 2, 3 befindet, so daß mindestens jeweils ein zusätzlicher Fototransistor beleuchtet wird, was durch strichpunktierte Randstrahlen angedeutet ist. Dieses wird durch die Erfindung vermieden, ohne daß aufwendige optische Einrichtungen benötigt werden.

Fig. 3 zeigt einen Lichtvorhang, der aus acht Lichtschranken K1 bis K8 besteht, wobei jeweils eine Lichtschranke von einem Sender S und einem Empfänger E gebildet wird. Derartige Lichtvorhänge dienen dazu, Gefahrenbereiche abzusichern oder festzustellen, ob Paletten oder Container seitlich nicht überladen sind. So bringt beispielsweise eine seitliche Überladung in einem Hochregallager Probleme. Zur Absicherung eines Gefahrenbereichs kann beispielsweise ein Lichtvorhang vor einer Maschine derart angeordnet sein, daß die Maschine abgeschaltet wird, wenn eine Person als solche oder beispielsweise nur mit der Hand den Lichtvorhang durchdringt.

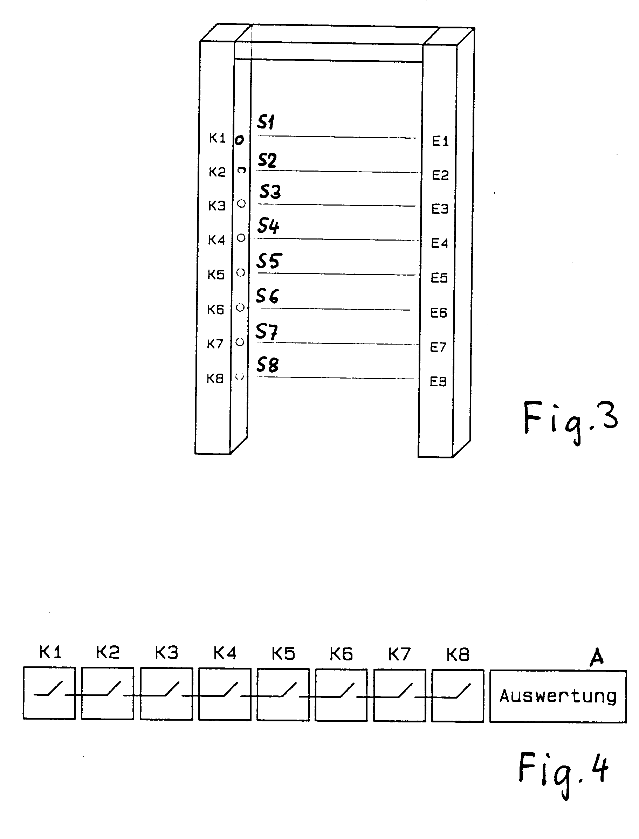

In jedem Fall ist der Lichtvorhang derart auszulegen, daß bereits die Unterbrechung einer einzigen Lichtschranke ein entsprechendes Signal zur Folge hat. Deshalb werden die Ausgangssignale der Lichtschranken im Sinne der in Fig. 4 dargestellten Reihenschaltung der Lichtschranken ausgewertet. Diese Wirkung wird jedoch gestört, wenn Licht von einem der Sender S1 bis S8 außer in den zugehörigen Empfänger E1 bis E8 in einen oder mehrere andere Empfänger eintritt. Dieser Nachteil wird durch die erfindungsgemäßen Maßnahmen verhindert.

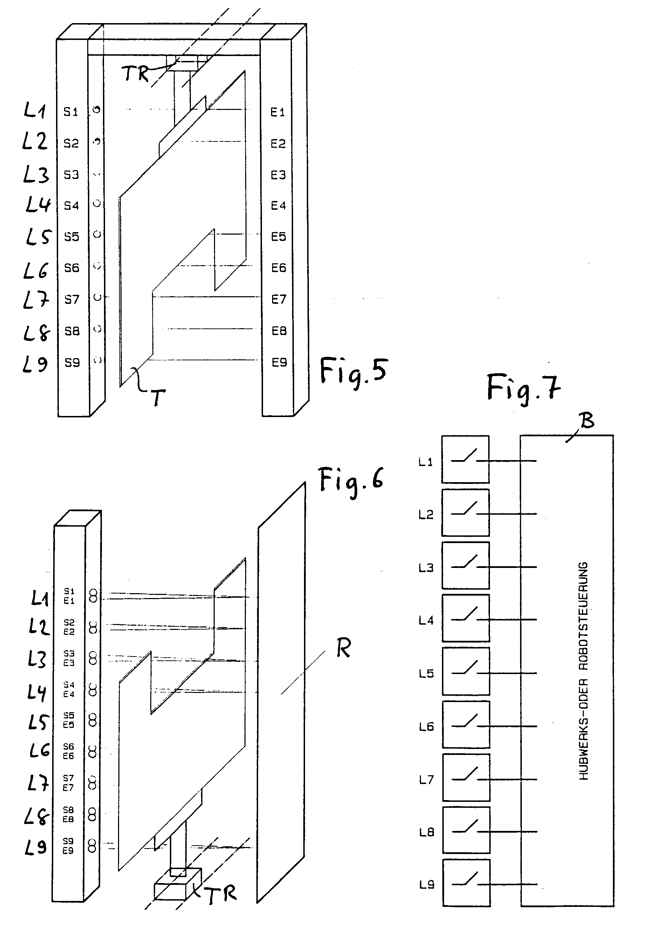

Mehrere parallel angeordnete Lichtschranken werden häufig auch zur Erkennung von Teilen verwendet, beispielsweise solchen, die einer Lackieranlage zugeführt werden. Zwei Ausführungsbeispiele davon sind in den Figuren 5 und 6 dargestellt, wobei jeweils eine Lichtschranke L1 bis L9 aus einem Sender S1 bis S9 und einem Empfänger E1 bis E9 besteht. Während bei dem Ausführungsbeispiel nach Fig. 5 die Sender und Empfänger auf verschiedenen Seiten des abzutastenden Teils T angeordnet sind, sind bei dem Ausführungsbeispiel nach Fig. 6 die Sender und Empfänger auf der gleichen Seite angeordnet, wobei die von den Sendern ausgehenden Lichtstrahlen von einer Reflexfolie R reflektiert werden.

Das Teil T wird mit Hilfe einer lediglich angedeuteten Transporteinrichtung TR durch die Lichtschranken gefahren, worauf die durch die Unterbrechung bzw. Freigabe der Lichtschranken entstehenden Signale in an sich bekannter Weise ausgewertet werden. Auch wird durch die erfindungsgemäßen Maßnahmen vermieden, daß das Ergebnis der Auswertung dadurch verfälscht wird, daß Übersprechen zwischen den einzelnen Lichtschranken stattfindet.

Fig. 7 verdeutlicht die Zuführung der Ausgangssignale der Lichtschranken L1 bis L9 zu Eingängen einer Hubwerks- oder Robotsteuerung B. Dabei werden die erfaßten Signale direkt in die Steuerung der Bearbeitungsstation eingelesen und über eine vorgegebene Zeit gespeichert, so daß die Teile bearbeitet werden können, wenn sie nach der vorgegebenen Zeit die Bearbeitungsstation erreicht haben. Die Bearbeitung wird dann der zuvor erkannten Form des Teils angepaßt. Im Falle einer Lackierung werden also nur die von dem Teil eingenommenen Flächen lackiert.

Für die Lichtschranken bei den Anordnungen nach den Figuren 3, 5 und 6 können Schaltungen entsprechend Fig. 1 verwendet werden, wobei eine entsprechende Anzahl von Empfängern, Sendern und weiteren Baugruppen vorzusehen ist.

## Patentansprüche

1. Einrichtung mit mindestens einem optischen Sender und einem optischen Empfänger, dadurch gekennzeichnet, daß der Sender (1, 2, 3) pulsierend Licht aussendet und daß nur das während der Impulsdauer in den Empfänger (4, 5, 6) eintretende Licht ausgewertet wird.

2. Einrichtung nach Anspruch 1, dadurch gekennzeichnet, daß zum Abtasten jeweils einer von mehreren Reihen von Markierungen (31, 32, 33) eines Inforamtionsträgers (34) ein Sender (1, 2, 3) und ein Empfänger (4, 5, 6) vorgesehen sind, daß die Sender (1, 2, 3) zu verschiedenen Zeiten Licht aussenden und daß Licht ausgewertet wird, das in die Empfänger (4, 5, 6) während der Impulsdauer des jeweils zugeordneten Senders (1, 2, 3) eintritt.

3. Einrichtung nach Anspruch 3, dadurch gekennzeichnet, daß der pulsierende Betrieb der Sender (1, 2, 3) mit einer wesentlich größeren Frequenz als die Frequenz des durch die Abtastung entstehenden Informationssignals erfolgt.

4. Einrichtung nach Anspruch 1, wobei mehrere Lichtschranken von je einem optischen Sender und einem optischen Empfänger gebildet werden, dadurch gekennzeichnet, daß die Sender zu verschiedenen Zeiten Licht aussenden und daß Licht ausgewertet wird, das in die Empfänger während der Impulsdauer des jeweils zugeordneten Senders eintritt.

5. Einrichtung nach Anspruch 4, dadurch gekennzeichnet, daß die Lichtschranken (K1 bis K8) einen Lichtvorhang bilden und daß bei Unterbrechung von einer oder mehreren Lichtschranken (K1 bis K8) ein Signal abgegeben wird.

6. Einrichtung nach Anspruch 4, dadurch gekennzeichnet, daß die Lichtschranken (L1 bis L9) zur Erkennung von Teilen vorgesehen sind und daß Ausgangssignale der Lichtschranken (L1 bis L9) einer Auswerteschaltung (B) zuführbar sind.

7. Einrichtung nach einem der vorhergehenden Ansprüche, dadurch gekennzeichnet, daß während derjenigen Zeit, während der das in einen Empfänger (4, 5, 6) eintretende Licht ausgewertet wird, der zugeordnete Sender (1, 2, 3) ein Codesignal sendet.
